Europäisches Patentamt

European Patent Office

Office européen des brevets

(11) Veröffentlichungsnummer: **0 460 355 A1**

## (12) EUROPÄISCHE PATENTANMELDUNG

(21) Anmeldenummer: **91102221.8**

(22) Anmeldetag: **16.02.91**

(51) Int. Cl.5: **B65G 69/04, B65G 69/18**

(30) Priorität: **02.06.90 DE 9006250 U**

(43) Veröffentlichungstag der Anmeldung:
**11.12.91 Patentblatt 91/50**

(84) Benannte Vertragsstaaten:
**AT BE CH DE DK ES FR GB GR IT LI LU NL SE**

(71) Anmelder: **Möller Werke GmbH**
**Auf dem Kupferhammer**
**W-4800 Bielefeld 14(DE)**

(72) Erfinder: **Marquardt, Herbert**
**Jauerstrasse 6**
**W-4802 Halle(DE)**

(74) Vertreter: **Thielking, Bodo, Dipl.-Ing. et al**
**Patentanwälte Dipl.-Ing. Bodo Thielking**
**Dipl.-Ing. Otto Elbertzhagen Gadderbaumer**
**Strasse 20**
**W-4800 Bielefeld 1(DE)**

(54) **Füllstutzen mit Verteilereinrichtung für Schuttgüter.**

(57) Ein Füllstutzen für Schüttgüter weist einen zur Abdichtung der Füllöffnung des Behälters ausgebildeten Außenbalg (4) auf und besitzt eine am Auslaufende seines Füllrohrs (3) angeordnete Verteilerein-richtung (7). Die Verteilereinrichtung (7) besitzt auswärts weisende Lufauslässe (11). Aus diesen Luftauslässen (11) strömt Druckluft, welche das Füllgut betriebssicher radial nach außen trägt.

Fig. 1

EP 0 460 355 A1

Die Erfindung betrifft einen Füllstutzen für Schüttgüter, dessen Füllrohr von einem zur Abdichtung der Füllöffnung eines Behälters ausgebildeten Außenbalg umgeben ist und der eine am Auslaufende des Füllrohrs angeordnete Verteilereinrichtung aufweist.

Derartige Füllstutzen für Schüttgüter werden zur staubfreien Verladung von Schüttgütern verwendet. Der beim Füllvorgang entstehende Staub wird im Ringspalt zwischen dem Außenbalg und dem Füllrohr abgesaugt. Am unteren Ende des Füllstutzens ist eine Verteilereinrichtung vorgesehen, welche dazu dient, das Füllgut stärker seitlich zu verteilen, als sich dies aus dem Schüttwinkel ergibt. Eine bekannte Verteilereinrichtung besteht aus einer unterhalb der Auslauföffnung des Füllrohrs angeordneten, um eine vertikale Achse rotierenden Verteilerscheibe oder Streuscheibe.

Bei dieser Einrichtung wird das auftreffende Schüttgut aufgrund der Fliehkraftwirkung der Verteilerscheibe nach außen getragen. Die bekannte Einrichtung ist aufwendig und störanfällig. Der elektrische Antrieb muß explosionsgeschützt ausgeführt werden.

Ausgehend von diesem Stand der Technik liegt der Erfindung die Aufgabe zugrunde, einen Füllstutzen für Schüttgüter zu schaffen, der eine einfach aufgebaute und betriebssichere Verteilereinrichtung aufweist.

Die Lösung dieser Aufgabe erfolgt erfindungsgemäß dadurch, daß die Verteilereinrichtung aufwärts weisende Luftauslässe aufweist. Aus den Luftauslässen oder Luftdüsen strömt Druckluft, welche das Schüttgut nach außen trägt.

Bei einer bevorzugten Ausführungsform der Erfindung sind die Luftauslässe als Düsen ausgebildet, die auf dem Mantel der als Verteilerkegel ausgebildeten Verteilereinrichtung angeordnet sind. Bei einer solchen Anordnung wird die seitliche Austragswirkung der Luftdüsen durch die Form des Verteilerkegels unterstützt. Der Verteilerkegel ist dabei vorzugsweise als Verschlußkegel für das Füllrohr ausgebildet und erfüllt damit eine Doppelfunktion.

Bei einer weiteren vorteilhaften Ausführungsform ist der Verteilerkegel über Haltestangen am Füllrohrende befestigt, wobei die Druckluftzuleitung zu den Luftauslässen durch die Haltestangen erfolgt. Eine solche Druckluftzuführung ist besonders einfach und läßt sich ohne zusätzliche, verschleißgefährdete Druckluftleitungen bewirken.

Es hat sich als zweckmäßig erwiesen, daß zumindest einige Luftauslässe radial am Verteilerkegel angeordnet sind.

Weiterhin ist es vorteilhaft, daß zumindest einige Luftauslässe tangential am Verteilerkegel angeordnet sind.

Die genaue Anordnung und Neigung der Luftauslässe wird entsprechend den Eigenschaften der zu ladenden Füllgüter gewählt. Bei allen möglicherweise unterschiedlichen Anordnungen und Neigungen für unterschiedliche Füllgüter bleibt das gemeinsame Merkmal, daß die mit Druckluft betriebenen Luftauslässe oder Düsen vom Zentrum des Füllgutstroms nach außen gerichtet sind, um durch einen im wesentlichen horizontalen Luftstrom die Verteilung zur Seite sicherzustellen.

Nachstehend wird eine bevorzugte Ausführungsform der Erfindung anhand der Zeichnung im einzelnen beschrieben. Es zeigen:

Figur 1 - eine Gesamtansicht des Füllstutzens im Füllbetrieb für einen Lkw-Schüttgutbehälter,

Figur 2 - eine genauere schematische Darstellung des Füllrohrendes mit Verteilereinrichtung.

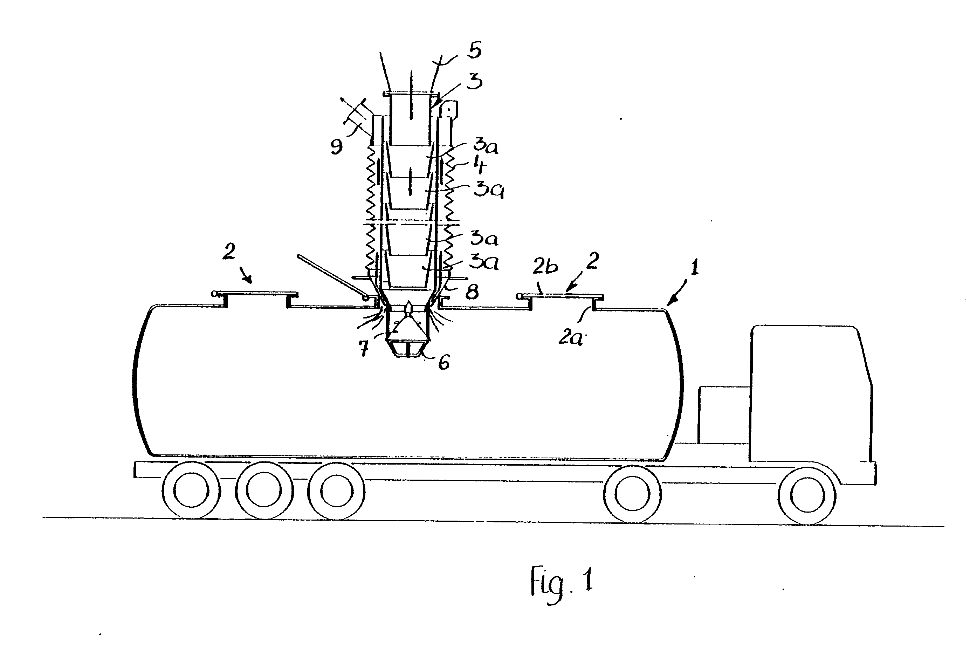

Der in Figur 1 dargestellte Behälter ist ein im wesentlichen zylindrischer Tank, der drei Mannlöcher 2 mit Deckel aufweist. Jedes Mannloch besteht aus einem Mannlochstutzen 2a und einem Klappdeckel 2b.

Am unteren Ende eines Silos, also am Siloauslauf 5, ist ein insgesamt mit 3 bezeichnetes Füllrohr vorgesehen, das einzelne, kegelstumpfförmige Abschnitte 3a aufweist. Das Füllrohr 3 ist von einem zylindrischen Außenbalg 4 umgeben, der in einem konischen Endstück 8 endet. Das konische Endstück 8 liegt mit seiner Außenseite am Innenrand des Mannlochstutzens 2a an. Beim Füllvorgang wird die Behälterluft durch den Ringraum zwischen Füllrohr 3 und Außenbalg 4 durch den Absaugstutzen 5 abgesaugt.

Ein Griffring 10 dient dazu, den Füllstutzen in die passende Position zu verfahren.

Am unteren Ende des Füllrohrs 3 ist unterhalb eines Verteilerkegels 7, welcher auch als Verschlußkegel dient, ein Leitkörper 6 vorgesehen, der korbartig ausgebildet ist. Der Leitkörper dient dazu, das Einführen des Füllrohrs 3 in die Mannlöcher 2 zu erleichtern.

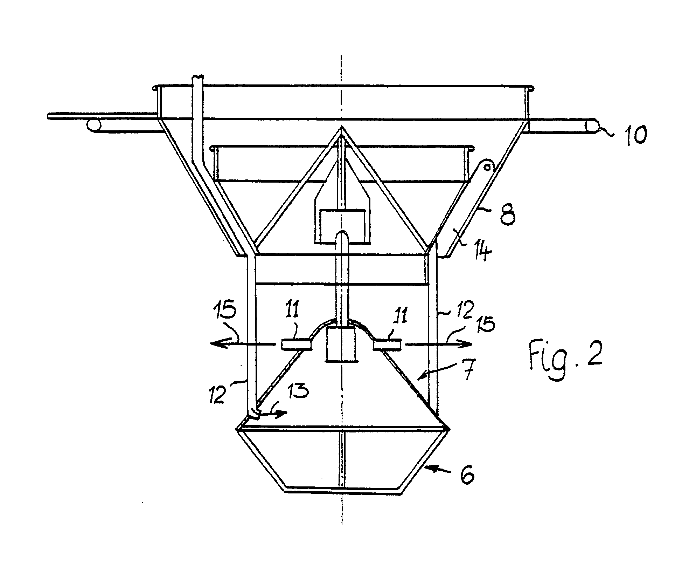

Der Verteilerkegel ist als ringsum geschlossener Kegel ausgebildet und wird über Haltestangen 12 am unteren Ende des Füllrohrs 3 befestigt. In der in Figur 2 dargestellten Position wird der Füllrohrauslauf über Distanzrippen 14 in der dargestellten Position gegenüber dem konischen Endstück 8 gehalten. Der als geschlossener Hohlkörper ausgebildete Verteilerkegel 7 besitzt im dargestellten Ausführungsbeispiel radial nach außen gerichtete, horizontal angeordnete Luftauslässe 11 oder Luftdüsen. Der Verteilerkegel wird über die als Rohre ausgebildeten Haltestangen 12 mit Druckluft versorgt. Die Einströmrichtung der Druckluft ist mit 13 bezeichnet. Die Ausströmrichtung der Druckluft aus den Luftauslässen oder Düsen 11 ist mit 15 bezeichnet.

**Patentansprüche**

1. Füllstutzen für Schüttgüter, dessen Füllrohr von einem zur Abdichtung der Füllöffnung eines Behälters ausgebildeten Außenbalg umgeben ist und der eine am Auslaufende des Füllrohrs angeordnete Verteilereinrichtung aufweist,
dadurch gekennzeichnet,
daß die Verteilereinrichtung auswärts weisende Luftauslässe (11) aufweist.

2. Füllstutzen nach Anspruch 1,
dadurch gekennzeichnet,
daß die Luftauslässe (11) als Düsen ausgebildet sind, die auf dem Mantel der als Verteilerkegel (7) ausgebildeten Verteilereinrichtung angeordnet sind.

3. Füllstutzen nach Anspruch 1 oder 2,
dadurch gekennzeichnet,
daß der Verteilerkegel (7) über Haltestangen (12) am Füllrohrende befestigt ist, wobei die Druckluftzuleitung zu den Luftauslässen (11) durch die Haltestangen (12) erfolgt.

4. Füllstutzen nach einem oder mehreren der Ansprüche 1 bis 3,
dadurch gekennzeichnet,
daß zumindest einige Luftauslässe (11) radial am Verteilerkegel (7) angeordnet sind.

5. Füllstutzen nach einem oder mehreren der Ansprüche 1 bis 4,
dadurch gekennzeichnet,
daß zumindest einige Luftauslässe (11) tangential am Verteilerkegel (7) angeordnet sind.

6. Füllstutzen nach einem oder mehreren der Ansprüche 1 bis 5,
dadurch gekennzeichnet,
daß der Verteilerkegel (7) als Verschlußkegel für das Füllrohr (3) ausgebildet ist.

Fig. 1

Fig. 2

Europäisches
Patentamt

**EUROPÄISCHER
RECHERCHENBERICHT**

Nummer der Anmeldung

**EP 91 10 2221**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y,A | EP-A-0 304 020   (STANELLE) <br> * Spalte 7, Zeile 4 - Spalte 8, Zeile 20; Figur 1 * <br> – – – | 1,3,6 | B 65 G 69/04 <br> B 65 G 69/18 |
| Y,A | EP-A-0 116 246   (COMPAGNIE FRANCAISE DE RAFFINA-GE) <br> * Seite 9, Zeile 20 - Seite 10, Zeile 6; Figur 2 * <br> – – – | 1,2,4,5 | |
| Y | US-A-4 074 836   (MULLER) <br> * Spalte 3, Zeile 39 - Spalte 4, Zeile 27; Figuren 2-4 * <br> – – – | 1 | |
| A | WO-A-8 102 565   (AHL) <br> * Seite 2, Zeilen 18 - 24; Figur 1 * <br> – – – – – | 2,4,5 | |

| RECHERCHIERTE SACHGEBIETE (Int. Cl.5) |
|---|
| B 65 G |

Der vorliegende Recherchenbericht wurde für alle Patentansprüche erstellt

| Recherchenort | Abschlußdatum der Recherche | Prüfer |
|---|---|---|
| Berlin | 09 September 91 | SIMON J J P |